# EUROPEAN PATENT SPECIFICATION

(11) **EP 2 540 527 B1**
(45) Date of publication and mention of the grant of the patent: **17.10.2018**
(21) Application number: 12173726.6
(22) Date of filing: 27.06.2012
(51) Int. Cl.: B60C 11/16

(54) **Anti-skid stud for insertion into the tread of a vehicle tire and pneumatic tire comprising such anti-skid studs**
Spike zum Einführen in die Lauffläche eines Fahrzeugreifens, und Luftreifen mit solchen Spikes
Clou antidérapant pour insertion dans la bande de roulement d'un pneu de véhicule et pneu comprenant de tels clous antidérapants

(30) Priority: 28.06.2011 US 201113170452
(43) Date of publication of application: 02.01.2013
(73) Proprietor: The Goodyear Tire & Rubber Company, Akron, OH 44316-0001 (US)
(72) Inventor: Pons, Frederic Michel-Jean, 57100 Thionville (FR); Fontaine, Sebastien Willy, 9188 Vichten (LU); Delu, Jerome Marcel Germain, L-8134 Bridel (LU)
(74) Representative: Kutsch, Bernd

(56) References cited:
- EP-A1- 2 145 777
- WO-A1-2009/068744
- DE-A1- 2 804 939
- US-A- 4 884 608
- US-A- 4 919 180
- US-A1- 2004 163 746

## Description

### Field of the Invention

The present invention relates to an anti-skid stud for insertion into the tread of a vehicle tire, and to a pneumatic tire having a tread comprising a plurality of such anti-skid studs. The majority of the anti-skid studs may be oriented in a common direction in the tire tread.

### Background of the Invention

Anti-skid studs for use in the treads of pneumatic tires are known for a long time. Such studs are axially symmetric along an axis extending along the length of the stud. An example for such a stud is described in WO 2011/036050 A1. A further example of a stud is described in US 2011/0088822 A1.

Studs may consist of a support body part made from aluminum or steel and one or more hard ceramic or hard metal pin body parts inserted into the upper end of the support body part. The design of anti-skid studs is limited in a number of ways in regulations in Sweden, Finland, or other countries in which the use of such studs is allowed. These regulations limit the mass of the studs, the stud pin protrusion above the tread surface, and the number and distribution of the studs over the tread surface for instance.

A challenge is presented to provide an anti-skid stud for pneumatic tires which provides improved grip on snow and in particular on ice compared to conventional studs but which nevertheless complies with regulations in Finland or Sweden for example.

A challenge is also presented to provide an anti-skid stud for pneumatic tires with at least the same or even improved stud retention properties compared to conventional studs.

Stud retention may be measured using the force needed to extract the stud from the tire tread. Stud retention may also be measured by the number of studs ejected from the tire tread after a given travelling distance of a vehicle equipped with the studded tire on snow and ice on a test course following a predefined speed and acceleration/braking pattern.

A challenge is also presented to provide an improved anti-skid stud for pneumatic tires which may be mounted using conventional studding machines.

WO-2009/068744 describes an anti-skid stud in accordance with the preamble of claim 1. Other asymmetric anti-skid studs are described in US-A-4,884,608, US-A-2004/0163746, US-A- 4,919,180, EP-A- 2 145 777 and DE-A- 28 04 939.

### Summary of the Invention

The invention relates to a stud in accordance with claim 1 and to a tire in accordance with claim 13.

Dependent claims refer to preferred embodiments of the invention.

In one aspect, the present invention relates to an anti-skid stud for insertion into the tread or the use with the tread of a vehicle tire, the stud comprising a support body part extending in an axial direction and a pin body part, the support body part comprising a bottom portion, a middle portion, and a head portion having an upper surface, wherein the pin body part extends beyond the upper surface of the head portion, wherein, when viewed in top view onto the head portion,
(i) the location of the center of gravity of the head portion is laterally offset from the center of gravity of the bottom portion; or
(ii) the location of the center of gravity of the pin body part is laterally offset from the center of gravity of the bottom portion; or
(iii) the location of the center of gravity of the pin body part is laterally offset from the center of gravity of the head portion; or
(iv) the location of the center of gravity of the middle portion is laterally offset from the center of gravity of the bottom portion.

In one aspect of the present invention, the location of the center of gravity of the head portion may be laterally offset from the center of gravity of the bottom portion and the location of the center of gravity of the pin body part may be laterally offset from the center of gravity of the bottom portion.

with alternating convex and concave shaped sides with the three convex shaped sides having the same length or about the same length.

In still another aspect of the present invention, the head portion may have, when viewed in top view onto the head portion, a substantially hexagonal shape with alternating convex and concave shaped sides with the two of the three concave shaped sides having the same length or about the same length and the third concave shaped side having a greater length, a 10% to 60% greater length, than the other two concave shaped sides. The convex shaped sides may have the same or about the same length. The convex shaped sides may be 10% to 30% shorter than the two concave shaped sides having the same length. The third concave shaped side may be located opposite the longest convex shaped side in case the convex shaped sides have a different length.

In yet another aspect of the present invention, the pin body part may have, when viewed in top view onto the pin body part:
(i) substantially the shape of a sector of a circle with or without rounded edges; or
(ii) substantially the shape of a sector of an annulus with or without rounded edges; or
(iii) substantially the shape of an aspherical lens or an axially symmetrical aspherical lens; or
(iv) substantially the shape of a trapezium with or without rounded edges;
(v) substantially the shape of a trapezium with or without rounded edges with alternating straight and concave shaped sides; or
(vi) substantially the shape of a trapezium with or without rounded edges with alternating straight and convex shaped sides; or
(vii) substantially the shape of a trapezium with or without rounded edges with alternating concave and convex shaped sides; or
(viii) substantially the shape of a tetragon with or without rounded edges with straight, concave and convex shaped sides.
   wherein the pin body part extends beyond the upper surface of the head portion, wherein, when viewed in top view onto the head portion,
(xi) the location of the center of gravity of the head portion is laterally offset from the center of gravity of the bottom portion; or
(xii) the location of the center of gravity of the pin body part is laterally offset from the center of gravity of the bottom portion; or
(xiii) the location of the center of gravity of the pin body part is laterally offset from the center of gravity of the head portion; or
(xiv) the location of the center of gravity of the middle portion is laterally offset from the center of gravity of the bottom portion.

The majority of the anti-skid studs or more than 70%, more than 90% or even all of the anti-skid studs may be oriented in a common direction.

The majority of the anti-skid studs or more than 70%, more than 90% or even all of the anti-skid studs may be oriented in a common direction with the leading edges being at least substantially oriented in a direction perpendicular to the rolling direction of the tire.

The present invention also relates to an anti-skid stud for insertion into the tread or the use with the tread of a vehicle tire, the stud comprising a support body part extending in an axial direction and a pin body part, the support body part comprising a bottom portion, a middle portion, and a head portion having an upper surface, wherein the pin body part extends beyond the upper surface of the head portion, and wherein, when rotating the support body part about an axis extending along the axial direction and through the center of gravity of the anti-skid stud, the rotated anti-skid stud is congruent with the respective unrotated anti-skid stud only when the anti-skid stud is rotated by 360 degrees or by an even multiple of 360 degrees. The present invention also relates to a pneumatic tire comprising a tread, the tread comprising a plurality of such anti-skid studs.

### Brief Description of the Drawings

The present invention will be described by way of example and with reference to the accompanying drawings in which:
FIG. 1 is a perspective view of an anti-skid stud of a first embodiment of the invention;
FIG. 2 is a perspective view of an anti-skid stud of a second embodiment of the invention;
FIG. 3 is a perspective view of an anti-skid stud of a third embodiment of the invention;
FIG. 4 is a side view of the anti-skid stud in the first embodiment;
FIG. 5 is a side view of the anti-skid stud in the second embodiment;
FIG. 6 is a side view of the anti-skid stud in the third embodiment;
FIG. 7 is a top view onto the anti-skid stud of the first embodiment;
FIG. 8 is a top view onto the anti-skid stud of the second embodiment;
FIG. 9 is a top view onto the anti-skid stud of the third embodiment;
FIG. 10 is a perspective view from the bottom side of the anti-skid stud of the first embodiment;
FIG. 11 is a perspective view from the bottom side of the anti-skid stud of the second embodiment;
FIG. 12 is a perspective view from the bottom side of the anti-skid stud of the third embodiment;
FIG. 13 is a bottom view onto the anti-skid stud of the first embodiment;
FIG. 14 is a bottom view onto the anti-skid stud of the second embodiment;
FIG. 15 is a bottom view onto the anti-skid stud of the third embodiment;
FIG. 16 is a top view onto an anti-skid stud in a fourth embodiment of the invention;
FIG. 17 is a top view onto an anti-skid stud in a fifth embodiment of the invention;
FIG. 18 is a top view onto an anti-skid stud in a sixth embodiment of the invention;
FIG. 19 is a top view onto an anti-skid stud in a seventh embodiment of the invention;
FIG. 20 is a top view onto an anti-skid stud in an eight embodiment of the invention;
FIG. 21 is a top view onto an anti-skid stud in a ninth embodiment of the invention; and
Fig. 22 is a top view onto the anti-skid stud of the second embodiment (see Fig. 8) indicating the location of the centers of gravity of the various parts of the stud.

### Detailed Description of Examples of the Present Invention

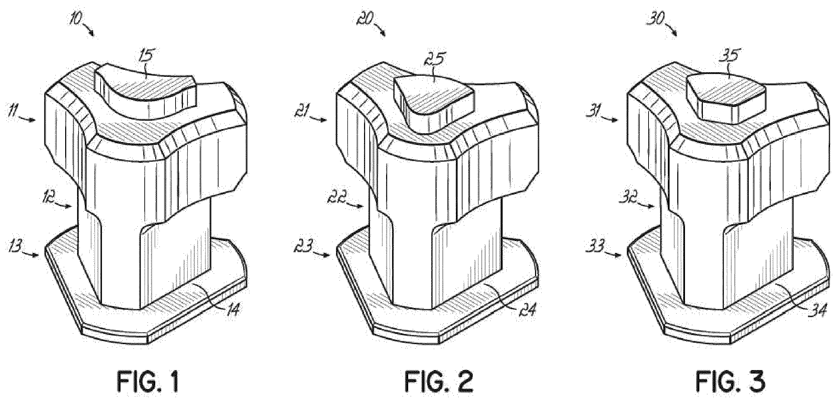

Fig. 1 shows in a first embodiment of the invention an anti-skid stud 10 consisting of a support body part 14 and a pin body part 15. The support body part comprises a head portion 11, a middle portion 12 and a bottom portion 13.

The support body part 14 comprises a receptacle with the pin body part 15 inserted into the receptacle and secured to the support body part 14 via press fit. The support body part 14 may be made from aluminum or steel. The pin body part 15 may be made from a commonly used hard ceramic material or hard metal material and extends axially beyond the upper surface of the head portion 11. As shown in Fig. 1, the head portion 11 has a larger size or diameter than the middle portion 12. The bottom portion 13 has also a larger size or diameter than the middle portion 12. The different shape of bottom portion 13, middle portion 12 and head portion 11 makes these parts of the anti-skid stud 10 distinguishable as separate sections of the anti-skid stud 10. The size of the bottom portion 13 may be the same than the size of the head portion 11 or slightly larger, i.e., 5% to 20% larger. The head portion 11 is axially above and adjacent to the middle portion 12. The middle portion 12 is axially above and adjacent to the bottom portion 13.

Besides the shape of the support body part 14 and the pin body part 15, which is further explained below and shown in the figures, the anti-skid stud 10 may correspond to the stud described in WO 2011/036050 A1 or in US 2011/0088822 A1 with regard to general dimensions.

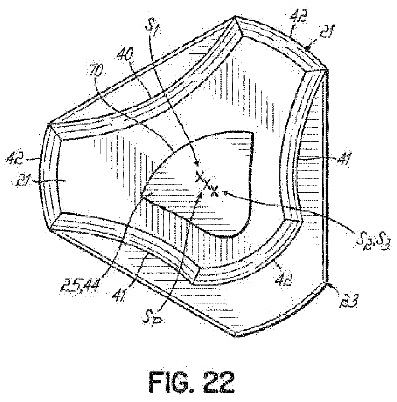

For the anti-skid stud 10 shown in Fig. 1, the location of the center of gravity S₁ of the head portion 11 is laterally offset from the center of gravity S₃ of the bottom portion 13 when viewed in top view onto the head portion 11. This is explained in more detail in Fig. 22. The lateral offset of S₁ with regard to S₃ may be in a range from 0.5 mm to 3.0 mm such as 1.5 mm or from 1.0 mm to 2.0 mm. The location of the center of gravity S₂ of the middle portion 12 is axially aligned with the center of gravity S₃ of the bottom portion 13, i.e. both are at the same location in top view onto the head portion 11. There may however also be a lateral offset in a range of from 0.3 mm to 1.0 mm. The location of the center of gravity S_{P} of the pin body part 15 is laterally offset from the center of gravity S₃ of the bottom portion 13 when viewed in top view onto the head portion 11. The center of gravity S_{P} of the pin body part 15 may however also be axially aligned with the center of gravity S₃ of the bottom portion 13, or the center of gravity S₁ of the head portion 11 may be axially aligned with the center of gravity S_{P} of the pin body part. The lateral offset of S_{P} with regard to S₃ may be in a range from 0.3 to 1.5 mm, such as 0.8 mm, or from 0.5 mm to 1.0 mm.

The bottom portion 13 has, when viewed in top view onto the head portion 11, a substantially hexagonal shape with rounded edges and alternating straight and slightly segment shaped sides. In alternative embodiments, it may also have a substantially triangular shape with or without rounded edges, a symmetrical substantially triangular shape with or without rounded edges, an equilateral triangular shape with or without rounded edges, a substantially hexagonal shape with only straight sides with or without rounded edges, a substantially hexagonal shape with only convex shaped sides with or without rounded edges, a substantially hexagonal shape with only concave shaped sides with or without rounded edges, or a substantially hexagonal shape with alternating convex and concave shaped sides with or without rounded edges.

The pin body part 15 has, when viewed in top view onto the pin body part 11, substantially the shape of a lens with or without rounded edges or the shape of an aspherical lens or an axially symmetrical aspherical lens 43. In alternative embodiments, it may also have substantially the shape of a sector of a circle with or without rounded edges, substantially the shape of a segment of an annulus with or without rounded edges, substantially the shape of a trapezium with or without rounded edges, substantially the shape of a hexagon with or without rounded edges, substantially the shape of a trapezium with or without rounded edges with alternating straight and concave shaped sides, substantially the shape of a trapezium with or without rounded edges with alternating straight and convex shaped sides, substantially the shape of a trapezium with or without rounded edges with alternating concave and convex shaped sides, or substantially the shape of a tetragon with or without rounded edges with straight, concave and convex shaped sides.

The middle portion 12 may mimic, when viewed in top view onto the middle portion 12, the shape of the bottom portion 13 at a reduced size. In general, the middle portion 12 may have, when viewed in top view onto the head portion, a substantially triangular shape with or without rounded edges, a symmetrical substantially triangular shape with or without rounded edges, an equilateral triangular shape with or without rounded edges, a substantially hexagonal shape with or without rounded edges, a substantially hexagonal shape with alternating straight and segment shaped sides with or without rounded edges, a substantially hexagonal shape with only straight sides with or without rounded edges, a substantially hexagonal shape with only convex shaped sides with or without rounded edges, a substantially hexagonal shape with only concave shaped sides with or without rounded edges or a substantially hexagonal shape with alternating convex and concave shaped sides with or without rounded edges.

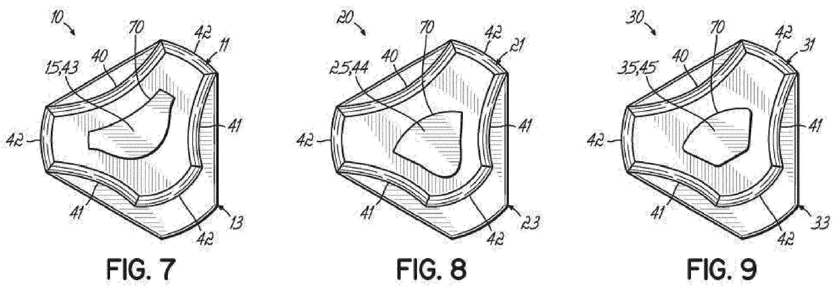

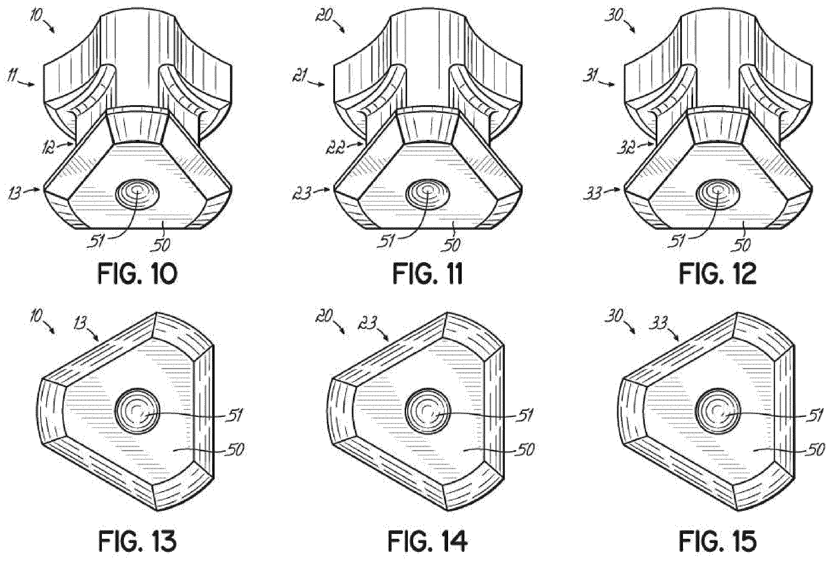

The head portion 11 in Fig. 1 has, in top view onto the head portion 11, a substantially hexagonal shape with alternating convex and concave shaped sides with rounded edges. Fig. 7 shows the leading edge 70 of the pin body 10, a long convex shaped side 40 of the head portion 11, two shorter convex shaped sides 41 of the head portion 11 of the same length and shape, and three concave shaped sides 42 of the head portion 11 of the same length and shape. The head portion 11 may have a chamfered upper and/or lower outline, as shown in Figs. 1 and 3. The bottom portion may also have a chamfered lower outline as shown in Figs. 10 and 13.

In alternative embodiments, the head portion 11 may also have a substantially triangular shape with or without rounded edges, an isosceles triangular shape with or without rounded edges, a substantially hexagonal shape with or without rounded edges, a substantially hexagonal shape with alternating straight and segment shaped sides with or without rounded edges, a substantially hexagonal shape with only straight sides with or without rounded edges, a substantially hexagonal shape with only convex shaped sides with or without rounded edges or a substantially hexagonal shape with only concave shaped sides with or without rounded edges.

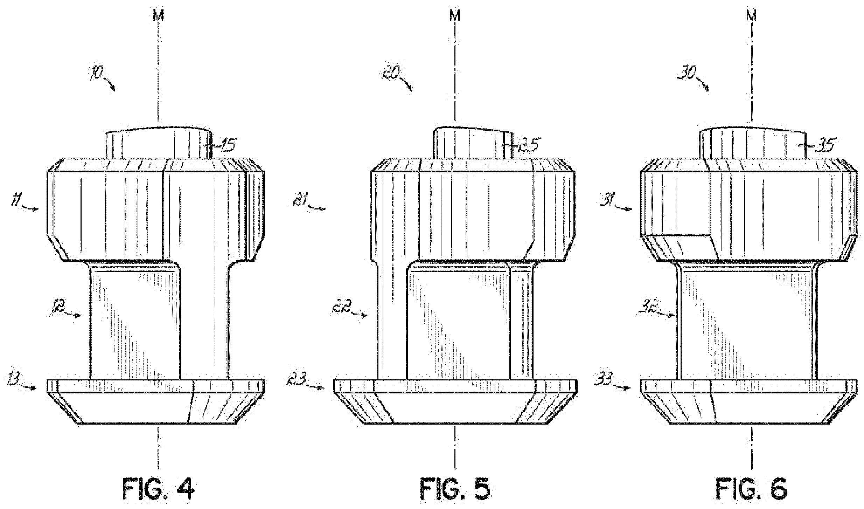

Fig. 4 shows a side view of Fig. 1 indicating an axial direction M. Fig. 7 shows a top view of Fig. 1. Fig. 10 is a perspective view from the bottom side of Fig. 1. Fig. 13 is a bottom view of Fig. 1. Fig. 13 shows the underside 50 of the anti-skid stud 10 with a recess 51 having the shape of a hemisphere or similar.

Fig. 2 shows in a second embodiment of the invention an anti-skid stud 20 consisting of a support body part 24 and a pin body part 25. The support body part comprises a head portion 21, a middle portion 22 and a bottom portion 23.

Fig. 5 shows a side view of Fig. 2. Fig. 8 shows a top view of Fig. 2. Fig. 11 shows a perspective view from the bottom side of Fig. 2. Fig. 14 is a bottom view of Fig. 2 showing the underside 50 of the anti-skid stud 20 comprising a recess 51 having the shape of a hemisphere..

Besides the shape of the pin body 25, the shape, dimensions and materials of the anti-skid stud 20 may be the same as the anti-skid body 10. The pin body 25 has substantially the shape of a sector 44 of a circle with rounded edges with two concave shaped sides of the same length and shape, one longer convex shaped side and one opposite shorter convex side (which may also be called a rounded edge).

Fig. 3 shows in a third embodiment of the invention an anti-skid stud 30 consisting of a support body part 34 and a pin body part 35. The support body part comprises a head portion 31, a middle portion 32 and a bottom portion 33.

Fig. 6 shows a side view of Fig. 3. Fig. 9 shows a top view of Fig. 3. Fig. 12 is a perspective view from the bottom side of Fig. 3. Fig. 15 is a bottom view of Fig. 3 showing the underside 50 of the anti-skid stud 20 comprising a recess 51 having the shape of an hemisphere.

Besides the shape of the pin body 35, the shape, dimensions and materials of the anti-skid stud 30 again may be the same as the anti-skid body 10. The pin body 35 has substantially the shape of an annulus 45 with rounded edges with one straight line, two concave sides of the same length and shape and one convex side opposite the straight line. The shape of the pin body 35 may also have substantially the shape of a trapezium with rounded edges or having the shape of a tetragon without slightly rounded edges with one straight, two concave and one convex shaped side.

In alternative embodiments of Figs. 7, 8 or 9, the pin body 15, 25, 35, when viewed in top view onto the pin body, may also have substantially the shape of a segment of an annulus with or without rounded edges, substantially the shape of a trapezium with or without rounded edges, substantially the shape of a hexagon with or without rounded edges, substantially the shape of a trapezium with or without rounded edges with alternating straight and concave shaped sides, substantially the shape of a trapezium with or without rounded edges with alternating straight and convex shaped sides, substantially the shape of a trapezium with or without rounded edges with alternating concave and convex shaped sides, or substantially the shape of a tetragon with or without rounded edges with straight, concave and convex shaped sides.

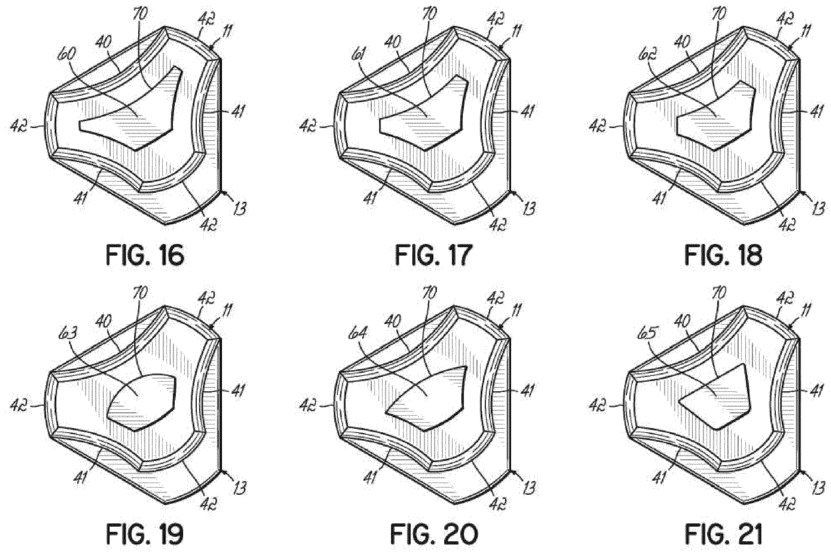

Figs. 16 to 21 show further embodiments in accordance with the present invention with further alternative shapes of the pin body in top view onto the respective pin body or the respective anti-skid stud. Besides the shape of the respective pin body, the shapes, dimensions and materials of the anti-skid studs of Figs. 16 to 21 may be are the same than the anti-skid body 10 shown in Figs. 1, 4, 7, 10 and 13. Figs. 16 to 21 also show the leadings edges 70 of the respective pin body parts with their various lengths and shapes as well as the respective pin body parts being either basically hexagonal or trapezoidal shaped pin body parts 60, 61, 62, or basically tetragonal shaped pin body parts 63, 64, 65.

The surface area of the pin body parts 15, 25, 35, 60, 61, 62, 63, 64, 65, when viewed in top view of the respective pin body part, may be in the range of from 4.5 mm² to 7.0 mm², alternatively from 5.0 mm² to 6.5 mm².

The leading edge 70 of the respective pin body part 15, 25, 35, 60, 61, 62, 63, 64, 65 has a length in a range of from 3.0 mm to 7.5 mm, alternatively from 3.0 mm to 5.5 mm or from 3.0 to 4.5 mm. The leading edge 70 may be oriented perpendicular or at least substantially perpendicular to the rolling direction of the tire.

The anti-skid studs in accordance with the present invention are particularly suitable for oriented use in a tire tread. In such a tread, the majority of the anti-skid studs or even all or about all the anti-skid studs are oriented in a common direction with the leading edges of the oriented anti-skid studs being at least substantially oriented in a direction perpendicular to the rolling direction of the tire.

Fig. 22 shows, for the embodiment of Figs. 2 and 8, the location of the center of gravity S₁ of the head portion 11, the location of the center of gravity S₃ of the bottom portion 13, the location of the center of gravity S₂ of the middle portion 12, and the location of the center of gravity S_{P} of the pin body part 15 when viewed in top view of the anti-skid stud 10 and when projecting these centers of gravity into the surface of the pin body part 15 or the head portion 11 respectively. This plane is perpendicular to the axial direction M extending along the length of the anti-skid stud 10. In the embodiment of Fig. 22, the centers of gravity S₁, S₂, S₃, Sₚ are all located on one straight line coincident with S₂ and S₃. The respective location of the centers of gravity S₁, S₂, S₃, Sₚ for the other embodiments described in this application is basically similar however with the location of Sₚ moving with the variation of the shape of the respective pin body.

The embodiments shown in Figs. 1-22 may also be described showing anti-skid studs for insertion into the tread or the use with the tread of a vehicle tire, wherein, when rotating the support body part about an axis extending along the axial direction and through the center of gravity of the anti-skid stud or at least of the head portion of the anti-skid stud, the rotated anti-skid stud is congruent with the respective unrotated anti-skid stud only when the anti-skid stud is rotated by 360 degrees, i.e., no axial symmetry of the anti-skid stud along said axis and the rotated anti-skid stud matching itself (but unrotated) only when rotated by 360 degrees.

The design of the pin body part together with the design of the support body part, when used as oriented studs in a tread of a tire such as a radial passenger or SUV tire, provides improved grip on icy roads compared to conventional studs such as those described in WO 2011/036050 A1. Due to the design of the head portion of the support body, the pin body part may be designed to have a relatively long and pronounced leading edge.

The anti-skid stud 10, 20, 30 in accordance with the present invention having a head portion 11, 21, 31 with three convex shaped sides 40, 41 (with concave or otherwise shaped sides or edges in between) as shown in Figs. 1-22 also allow the respective studs to be easily and reliably oriented when inserting the studs into a tire tread. Conventional machines for studding tires may have three fingers at their gun head which are arranged similar to the three fingers of common drill chucks gripping the borer in drilling machines. The fingers in the gun head of studding machines are in cross section oval or round, i.e., the design of the head portion 11, 21, 31 of the anti-skid studs 10, 20, 30 and the convex shape of the sides 40, 41 and their number may be such that it fits to the design and arrangement of these fingers. This allows it to grip the studs in a reliable way such that, once gripped by the fingers of the respective studding machine, the studs may later rotate before or while being inserted into a tire tread. Furthermore, the anti-skid studs in conventional studding machines are usually supplied to the gripping fingers at the end of the chuck or gun head of the studding machine through a pipe or channel extending coaxially through the chuck or gun head of the studding machine with this pipe of channel ending between the gripping fingers. The cross-section of this pipe or channel may now be adapted to the cross-section of the anti-skid studs supplied to the studding machine and in particular to the cross-section of the bottom portion 13, 23, 33 of the anti-skid studs so that the studs moving through this pipe of channel of the studding machine have already an orientation as required for achieving a wanted orientation of the studs after insertion into a tire tread. This orientation is kept when the studs are gripped by the finger of the studding machine before and while the stud is inserted into a respective hole in a tire tread. Hence, the design of the studs in accordance with the present invention ensures that the studs are kept in the desired orientation and do not twist during the studding process even when using conventional studding machines.

## Claims

1. An anti-skid stud for insertion into the tread of a vehicle tire, the stud (10) comprising a support body part (14) extending in an axial direction and a pin body part (15), the support body part (14) comprising a bottom portion (13), a middle portion (12), and a head portion (11) having an upper surface, wherein the bottom portion (13) is pointing radially inwards when viewed along the stud axis of the stud (10) when inserted in the tread of the vehicle tire and the upper surface is pointing radially outwards when viewed along the stud axis of the stud (10) when inserted in the tread of the vehicle tire, wherein the pin body part (15) is inserted and extends beyond the upper surface of the head portion (11); wherein,
(A) when viewed in top view onto the head portion (11) and the upper surface,
(i) the location of the center of gravity (S₁) of the head portion (11) is laterally offset from the center of gravity (S₃) of the bottom portion (13); or
(ii) the location of the center of gravity (S_{P}) of the pin body part (15) is laterally offset from the center of gravity (S₃) of the bottom portion (13); or
(iii) the location of the center of gravity (S_{P}) of the pin body part (15) is laterally offset from the center of gravity (S₁) of the head portion (11); or
(iv) the location of the center of gravity (S₂) of the middle portion (12) is laterally offset from the center of gravity (S₃) of the bottom portion (13); and/or
(B) when rotating the support body part (14) about an axis extending along the axial direction and through the center of gravity of the anti-skid stud (10), the rotated anti-skid stud is congruent with a respective unrotated anti-skid stud only when the anti-skid stud is rotated by 360 degrees or a multiple of 360 degrees;
and wherein the pin body part (15) has, when viewed in top view onto the pin body part (15) and the upper surface,
(i) substantially the shape of a sector of a circle with or without rounded edges; or
(ii) substantially the shape of a sector of an annulus with or without rounded edges; or
(iii) substantially the shape of an aspherical lens or an axially symmetrical aspherical lens; or
(iv) substantially the shape of a trapezium with or without rounded edges; or
(v) substantially the shape of a trapezium with or without rounded edges with alternating straight and concave shaped sides; or
(vi) substantially the shape of a trapezium with or without rounded edges with alternating straight and convex shaped sides; or
(vii) substantially the shape of a trapezium with or without rounded edges with alternating concave and convex shaped sides; or
(viii) substantially the shape of a tetragon with or without rounded edges with straight, concave and convex shaped sides;
**characterized in that** the head portion (11) has, when viewed in top view onto the head portion (11) and the upper surface,
(i) a substantially triangular shape with or without rounded edges; or
(ii) an isosceles triangular shape with or without rounded edges; or
(iii) a substantially hexagonal shape with or without rounded edges; or
(iv) a substantially hexagonal shape with alternating straight and segment shaped sides with or without rounded edges; or
(v) a substantially hexagonal shape with only straight sides with or without rounded edges; or
(vi) a substantially hexagonal shape with only convex shaped sides with or without rounded edges; or
(vii) a substantially hexagonal shape with only concave shaped sides with or without rounded edges; or
(viii) a substantially hexagonal shape with alternating convex and concave shaped sides with or without rounded edges.

2. The anti-skid stud of claim 1 wherein the location of the center of gravity (S₁) of the head portion (11) is laterally offset from the center of gravity (S₃) of the bottom portion (13), and wherein the location of the center of gravity (S_{P}) of the pin body part (15) is laterally offset from the center of gravity (S₃) of the bottom portion (13).

3. The anti-skid stud of claim 1 or 2 wherein the location of the center of gravity (S₁) of the head portion (11) is laterally offset from the center of gravity (S₃) of the bottom portion (13), and wherein the location of the center of gravity (S_{P}) of the pin body part (15) is laterally offset from the center of gravity (S₁) of the head portion (11).

4. The anti-skid stud of claim 1, 2 or 3 wherein the location of the center of gravity (S_{P}) of the pin body part (15) is laterally offset from the center of gravity (S₃) of the bottom portion (13) and wherein the location of the center of gravity (S_{P}) of the pin body part (15) is laterally offset from the center of gravity (S₁) of the head portion (11).

5. The anti-skid stud of at least one of the previous claims wherein the bottom portion (13) has, when viewed in top view onto the head portion (11) and the upper surface:
(i) a substantially triangular shape with or without rounded edges; or
(ii) a symmetrical substantially triangular shape with or without rounded edges; or
(iii) an equilateral triangular shape with or without rounded edges; or
(iv) a substantially hexagonal shape with or without rounded edges; or
(v) a substantially hexagonal shape with alternating straight and segment shaped sides with or without rounded edges; or
(vi) a substantially hexagonal shape with only straight sides with or without rounded edges; or
(vii) a substantially hexagonal shape with only convex shaped sides with or without rounded edges; or
(viii) a substantially hexagonal shape with only concave shaped sides with or without rounded edges; or
(ix) a substantially hexagonal shape with alternating convex and concave shaped sides with or without rounded edges.

6. The anti-skid stud of at least one of the previous claims wherein the middle portion (12) has, when viewed in top view onto the head portion (11) and the upper surface:
(i) a substantially triangular shape with or without rounded edges; or
(ii) a symmetrical substantially triangular shape with or without rounded edges;or
(iii) an equilateral triangular shape with or without rounded edges; or
(iv) a substantially hexagonal shape with or without rounded edges; or
(v) a substantially hexagonal shape with alternating straight and segment shaped sides with or without rounded edges; or
(vi) a substantially hexagonal shape with only straight sides with or without rounded edges; or
(vii) a substantially hexagonal shape with only convex shaped sides with or without rounded edges; or
(viii) a substantially hexagonal shape with only concave shaped sides with or without rounded edges; or
(ix) a substantially hexagonal shape with alternating convex and concave shaped sides with or without rounded edges.

7. The anti-skid stud of at least one of the previous claims wherein the middle portion (12) mimics, when viewed in top view onto the middle portion (12) radially inwards along the axis of the stud, the shape of the bottom portion (13) at a reduced size.

8. The anti-skid stud of claim 1 wherein the convex shaped sides in option (vi), (vii) or (viii) of the characterizing part of claim 1 are longer than the concave shaped sides.

9. The anti-skid stud of claim 1 wherein, when viewed in top view onto the head portion (11) and the upper surface, the head portion (11) has
(i) a substantially hexagonal shape with alternating convex and concave shaped sides, wherein the two of the three convex shaped sides have the same length or about the same length and the third convex shaped side has a greater length than the other two convex shaped sides; or
(ii) a substantially hexagonal shape with alternating convex and concave shaped sides, wherein the three concave shaped sides have the same length or about the same length; or
(iii) a substantially hexagonal shape with alternating convex and concave shaped sides, wherein the three convex shaped sides have the same length or about the same length; or
(iv) a substantially hexagonal shape with alternating convex and concave shaped sides, wherein the two of the three concave shaped sides have the same length or about the same length and the third concave shaped side has a greater length than the other two concave shaped sides;
(v) a substantially hexagonal shape with alternating convex and concave shaped sides, and wherein two of the three convex shaped sides have the same length or about the same length and the third convex shaped side has a greater length than the other two convex shaped sides.

10. The anti-skid stud of claim 9 wherein in option (iv) of claim 9 the third concave shaped side is located opposite the longest convex shaped side, or wherein in option (v) the third convex shaped side is located opposite the longest concave shaped side.

11. The anti-skid stud of claim 1 wherein in option (iii) of section (B) of claim 1 the lens comprises an at least substantially convex side and an at least substantially concave opposite side.

12. The anti-skid stud of at least one of the previous claims wherein, when viewed in top view onto the pin body part (15) and the upper surface, the pin body part (15) mimics the shape of the head portion (11) at a reduced size.

13. A pneumatic tire comprising a tread, the tread comprising a plurality of anti-skid studs (10), wherein at least one of the studs (10), preferably the majority of the studs (10) or all of the studs (10) are studs (10) in accordance with claim 1.

## Patentansprüche

1. Antirutsch-Spike zum Einbringen in die Lauffläche eines Fahrzeugreifens, wobei der Spike (10) einen Stützkörperteil (14), der sich in einer radialen Richtung erstreckt, und einen Stiftkörperteil (15) umfasst, wobei der Stützkörperteil (14) einen unteren Teil (13), einen mittleren Teil (12) und einen Kopfteil (11) mit einer Oberseite umfasst, wobei der untere Teil (13) radial einwärts weist, gesehen entlang der Spikeachse des Spikes (10), wenn er in die Lauffläche des Fahrzeugreifens eingebracht ist, und die Oberseite radial auswärts weist, gesehen entlang der Spikeachse des Spikes (10), wenn er in die Lauffläche des Fahrzeugreifens eingebracht ist, wobei der Stiftkörperteil (15) in die Oberseite des Kopfteils (11) eingebracht ist und sich über diese hinaus erstreckt; wobei,
(A) gesehen in Draufsicht auf den Kopfteil (11) und die Oberseite,
(i) der Ort des Schwerpunkts (S₁) des Kopfteils (11) seitlich versetzt von dem Schwerpunkt (S₃) des unteren Teils (13) ist; oder
(ii) der Ort des Schwerpunkts (S_{P}) des Stiftkörperteils (15) seitlich versetzt von dem Schwerpunkt (S₃) des unteren Teils (13) ist; oder
(iii) der Ort des Schwerpunkts (S_{P}) des Stiftkörperteils (15) seitlich versetzt von dem Schwerpunkt (S₁) des Kopfteils (11) ist; oder
(iv) der Ort des Schwerpunkts (S₂) des mittleren Teils (12) seitlich versetzt von dem Schwerpunkt (S₃) des unteren Teils (13) ist; und/oder
(B) wenn der Trägerkörperteil (14) um eine Achse rotiert wird, die sich entlang der axialen Richtung und durch den Schwerpunkt des Antirutsch-Spikes (10) erstreckt, der rotierte Antirutsch-Spike nur dann deckungsgleich mit einem entsprechenden nicht rotierten Antirutsch-Spike ist, wenn der Antirutsch-Spike um 360 Grad oder ein Mehrfaches von 360 Grad rotiert ist;
und wobei der Stiftkörperteil (15), gesehen in Draufsicht auf den Stiftkörperteil (15) und die Oberseite,
(i) im Wesentlichen die Form eines Abschnitts eines Kreises mit oder ohne abgerundete Kanten aufweist; oder
(ii) im Wesentlichen die Form eines Abschnitts eines Rings mit oder ohne abgerundete Kanten aufweist; oder
(iii) im Wesentlichen die Form einer asphärischen Linse oder einer achsensymmetrischen asphärischen Linse aufweist; oder
(iv) im Wesentlichen die Form eines Trapezes mit oder ohne abgerundete Kanten aufweist; oder
(v) im Wesentlichen die Form eines Trapezes mit oder ohne abgerundete Kanten mit abwechselnden gerade und konkav geformten Seiten aufweist; oder
(vi) im Wesentlichen die Form eines Trapezes mit oder ohne abgerundete Kanten mit abwechselnden gerade und konvex geformten Seiten aufweist; oder
(vii) im Wesentlichen die Form eines Trapezes mit oder ohne abgerundete Kanten mit abwechselnden konkav und konvex geformten Seiten aufweist; oder
(viii) im Wesentlichen die Form eines Vierecks mit oder ohne abgerundete Kanten mit gerade, konkav und konvex geformten Seiten aufweist;
**dadurch gekennzeichnet, dass** der Kopfteil (11), gesehen in Draufsicht auf den Kopfteil (11) und die Oberseite,
(i) eine im Wesentlichen dreieckige Form mit oder ohne abgerundete Kanten aufweist; oder
(ii) eine gleichschenklige dreieckige Form mit oder ohne abgerundete Kanten aufweist; oder
(iii) eine im Wesentlichen sechseckige Form mit oder ohne abgerundete Kanten aufweist; oder
(iv) eine im Wesentlichen sechseckige Form mit abwechselnden geraden und segmentförmigen Seiten mit oder ohne abgerundete Kanten aufweist; oder
(v) eine im Wesentlichen sechseckige Form mit nur geraden Seiten mit oder ohne abgerundete Kanten aufweist; oder
(vi) eine im Wesentlichen sechseckige Form mit nur konvex geformten Seiten mit oder ohne abgerundete Kanten aufweist; oder
(vii) eine im Wesentlichen sechseckige Form mit nur konkav geformten Seiten mit oder ohne abgerundete Kanten aufweist; oder
(viii) eine im Wesentlichen sechseckige Form mit abwechselnden konvex und konkav geformten Seiten mit oder ohne abgerundete Kanten aufweist.

2. Antirutsch-Spike nach Anspruch 1, wobei der Ort des Schwerpunkts (S₁) des Kopfteils (11) seitlich versetzt von dem Schwerpunkt (S₃) des unteren Teils (13) ist, und wobei der Ort des Schwerpunkts (S_{P}) des Stiftkörperteils (15) seitlich versetzt von dem Schwerpunkt (S₃) des unteren Teils (13) ist.

3. Antirutsch-Spike nach Anspruch 1 oder 2, wobei der Ort des Schwerpunkts (S₁) des Kopfteils (11) seitlich versetzt von dem Schwerpunkt (S₃) des unteren Teils (13) ist, und wobei der Ort des Schwerpunkts (S_{P}) des Stiftkörperteils (15) seitlich versetzt von dem Schwerpunkt (S₁) des Kopfteils (11) ist.

4. Antirutsch-Spike nach Anspruch 1, 2 oder 3, wobei der Ort des Schwerpunkts (S_{P}) des Stiftkörperteils (15) seitlich versetzt von dem Schwerpunkt (S₃) des unteren Teils (13) ist, und wobei der Ort des Schwerpunkts (S_{P}) des Stiftkörperteils (15) seitlich versetzt von dem Schwerpunkt (S₁) des Kopfteils (11) ist.

5. Antirutsch-Spike nach mindestens einem der vorhergehenden Ansprüche, wobei der untere Teil (13), gesehen in Draufsicht auf den Kopfteil (11) und die Oberseite, aufweist:
(i) eine im Wesentlichen dreieckige Form mit oder ohne abgerundete Kanten; oder
(ii) eine symmetrische, im Wesentlichen dreieckige Form mit oder ohne abgerundete Kanten; oder
(iii) eine gleichseitige dreieckige Form mit oder ohne abgerundete Kanten; oder
(iv) eine im Wesentlichen sechseckige Form mit oder ohne abgerundete Kanten; oder
(v) eine im Wesentlichen sechseckige Form mit abwechselnden geraden und segmentförmigen Seiten mit oder ohne abgerundete Kanten; oder
(vi) eine im Wesentlichen sechseckige Form mit nur geraden Seiten mit oder ohne abgerundete Kanten; oder
(vii) eine im Wesentlichen sechseckige Form mit nur konvex geformten Seiten mit oder ohne abgerundete Kanten; oder
(viii) eine im Wesentlichen sechseckige Form mit nur konkav geformten Seiten mit oder ohne abgerundete Kanten; oder
(ix) eine im Wesentlichen sechseckige Form mit abwechselnden konvex und konkav geformten Seiten mit oder ohne abgerundete Kanten.

6. Antirutsch-Spike nach mindestens einem der vorhergehenden Ansprüche, wobei der mittlere Teil (12), gesehen in Draufsicht auf den Kopfteil (11) und die Oberseite, aufweist:
(i) eine im Wesentlichen dreieckige Form mit oder ohne abgerundete Kanten; oder
(ii) eine symmetrische, im Wesentlichen dreieckige Form mit oder ohne abgerundete Kanten; oder
(iii) eine gleichseitige dreieckige Form mit oder ohne abgerundete Kanten; oder
(iv) eine im Wesentlichen sechseckige Form mit oder ohne abgerundete Kanten; oder
(v) eine im Wesentlichen sechseckige Form mit abwechselnden geraden und segmentförmigen Seiten mit oder ohne abgerundete Kanten; oder
(vi) eine im Wesentlichen sechseckige Form mit nur geraden Seiten mit oder ohne abgerundete Kanten; oder
(vii) eine im Wesentlichen sechseckige Form mit nur konvex geformten Seiten mit oder ohne abgerundete Kanten; oder
(viii) eine im Wesentlichen sechseckige Form mit nur konkav geformten Seiten mit oder ohne abgerundete Kanten; oder
(ix) eine im Wesentlichen sechseckige Form mit abwechselnden konvex und konkav geformten Seiten mit oder ohne abgerundete Kanten.

7. Antirutsch-Spike nach mindestens einem der vorhergehenden Ansprüche, wobei der mittlere Teil (12), gesehen in Draufsicht auf den mittleren Teil (12) radial einwärts entlang der Achse des Spikes, die Form des unteren Teils (13) in verringerter Größe nachbildet.

8. Antirutsch-Spike nach Anspruch 1, wobei die konvex geformten Seiten in Option (vi), (vii) oder (viii) des kennzeichnenden Teils von Anspruch 1 länger als die konkav geformten Seiten sind.

9. Antirutsch-Spike nach Anspruch 1, wobei, gesehen in Draufsicht auf den Kopfteil (11) und die Oberseite, der Kopfteil (11)
(i) eine im Wesentlichen sechseckige Form mit abwechselnden konvex und konkav geformten Seiten aufweist, wobei die zwei der drei konvex geformten Seiten die gleiche Länge oder ungefähr die gleiche Länge aufweisen und die dritte konvex geformte Seite eine größere Länge als die zwei anderen konvex geformten Seiten aufweist; oder
(ii) eine im Wesentlichen sechseckige Form mit abwechselnden konvex und konkav geformten Seiten aufweist, wobei die drei konkav geformten Seiten die gleiche Länge oder ungefähr die gleiche Länge aufweisen; oder
(iii) eine im Wesentlichen sechseckige Form mit abwechselnden konvex und konkav geformten Seiten aufweist, wobei die drei konvex geformten Seiten die gleiche Länge oder ungefähr die gleiche Länge aufweisen; oder
(iv) eine im Wesentlichen sechseckige Form mit abwechselnden konvex und konkav geformten Seiten aufweist wobei die zwei der drei konkav geformten Seiten die gleiche Länge oder ungefähr die gleiche Länge aufweisen und die dritte konkav geformte Seite eine größere Länge als die zwei anderen konkav geformten Seiten aufweist;
(v) eine im Wesentlichen sechseckige Form mit abwechselnden konvex und konkav geformten Seiten, und wobei zwei der drei konvex geformten Seiten die gleiche Länge oder ungefähr die gleiche Länge aufweisen und die dritte konvex geformte Seite eine größere Länge als die zwei anderen konvex geformten Seiten aufweist.

10. Antirutsch-Spike nach Anspruch 9, wobei in Option (iv) von Anspruch 9 die dritte konkav geformte Seite sich gegenüber der längsten konvex geformten Seite befindet, oder wobei in Option (v) die dritte konvex geformte Seite sich gegenüber der längsten konkav geformten Seite befindet.

11. Antirutsch-Spike nach Anspruch 1, wobei in Option (iii) von Abschnitt (B) von Anspruch 1 die Linse eine mindestens im Wesentlichen konvexe Seite und eine mindestens im Wesentlichen konkave gegenüberliegende Seite umfasst.

12. Antirutsch-Spike nach mindestens einem der vorhergehenden Ansprüche, wobei, gesehen in Draufsicht auf den Stiftkörperteil (15) und die Oberseite, der Stiftkörperteil (15) die Form des Kopfteils (11) in verringerter Größe nachbildet.

13. Luftreifen, umfassend eine Lauffläche, wobei die Lauffläche eine Vielzahl von Antirutsch-Spikes (10) umfasst, wobei mindestens einer der Spikes (10), bevorzugt die Mehrheit der Spikes (10) oder alle Spikes (10), Spikes (10) gemäß Anspruch 1 sind.

## Revendications

1. Clou d'antidérapage pour son insertion dans la bande de roulement d'un bandage pneumatique de véhicule, le clou (10) comprenant un élément (14) faisant office de corps de support s'étendant dans une direction axiale et un élément (15) faisant office de corps en forme de broche, l'élément (14) faisant office de corps de support comprenant une portion inférieure (13), une portion médiane (12) et une portion de tête (11) possédant une surface supérieure ; dans lequel la portion inférieure (13) pointe en direction radiale vers l'intérieur lorsqu'on porte son regard dans la direction de l'axe du clou (10) après l'insertion de ce dernier dans la bande de roulement du bandage pneumatique de véhicule et la surface supérieure pointe en direction radiale vers l'extérieur lorsqu'on porte son regard dans la direction de l'axe du clou (10) après l'insertion de ce dernier dans la bande de roulement du bandage pneumatique de véhicule ; dans lequel l'élément (15) faisant office de corps en forme de broche est inséré dans la surface supérieure de la portion de tête (11) et s'étend au-delà de ladite surface ; dans lequel
(A) lorsqu'on porte son regard dans une vue de sommet sur la portion de tête (11) et sur la surface supérieure :
(i) l'emplacement du centre de gravité (S₁) de la portion de tête (11) est décalé en direction latérale par rapport au centre de gravité (S₃) de la portion inférieure (13) ; ou
(ii) l'emplacement du centre de gravité (S_{P}) de l'élément (15) faisant office de corps en forme de broche est décalé en direction latérale par rapport au centre de gravité (S₃) de la portion inférieure (13) ; ou
(iii) l'emplacement du centre de gravité (S_{P}) de l'élément (15) faisant office de corps en forme de broche est décalé en direction latérale par rapport au centre de gravité (S₁) de la portion de tête (11) ; ou
(iv) l'emplacement du centre de gravité (S₂) de la portion médiane (12) est décalé en direction latérale par rapport au centre de gravité (S₃) de la portion inférieure (13) ; et/ou
(B) lorsque l'élément (14) faisant office de corps de support est mis en rotation autour d'un axe s'étendant dans la direction axiale et passant par le centre de gravité du clou d'antidérapage (10), le clou d'antidérapage mis en rotation coïncide avec un clou d'antidérapage respectif non mis en rotation, uniquement lorsque le clou d'antidérapage a effectué une rotation de 360° ou d'un multiple de 360° ;
et dans lequel l'élément (15) faisant office de corps en forme de broche possède, lorsqu'on porte son regard dans une vue de sommet sur l'élément (15) faisant office de corps en forme de broche et sur la surface supérieure ;
(i) essentiellement la configuration d'un secteur d'un cercle avec ou sans bords arrondis ; ou
(ii) essentiellement la configuration d'un secteur d'un espace annulaire avec ou sans bords arrondis ; ou
(iii) essentiellement la configuration d'une lentille asphérique ou d'une lentille asphérique symétrique en direction axiale ; ou
(iv) essentiellement la configuration d'un trapèze avec ou sans bords arrondis ; ou
(v) essentiellement la configuration d'un trapèze avec ou sans bords arrondis comprenant des côtés alternants de configuration rectiligne et de configuration concave ; ou
(vi) essentiellement la configuration d'un trapèze avec ou sans bords arrondis comprenant des côtés alternants de configuration rectiligne et de configuration convexe ; ou
(vii) essentiellement la configuration d'un trapèze avec ou sans bords arrondis comprenant des côtés alternants de configuration concave et de configuration convexe ; ou
(viii) essentiellement la configuration d'un quadrilatère avec ou sans bords arrondis comprenant des côtés de forme rectiligne, de configuration concave et de configuration convexe ;
**caractérisé en ce que** la portion de tête (11) possède, lorsqu'on porte son regard dans une vue de sommet sur la portion de tête (11) et sur la surface supérieure :
(i) une configuration essentiellement triangulaire avec ou sans bords arrondis ; ou
(ii) la configuration d'un triangle isocèle avec ou sans bords arrondis ; ou
(iii) une configuration essentiellement hexagonale avec ou sans bords arrondis ; ou
(iv) une configuration essentiellement hexagonale comprenant des côtés alternants de forme rectiligne et sous la forme de segments, avec ou sans bords arrondis ; ou
(v) une configuration essentiellement hexagonale comprenant uniquement des côtés de forme rectiligne, avec ou sans bords arrondis ; ou
(vi) une configuration essentiellement hexagonale comprenant uniquement des côtés de configuration convexe, avec ou sans bords arrondis ; ou
(vii) une configuration essentiellement hexagonale comprenant uniquement des côtés de configuration concave, avec ou sans bords arrondis ; ou
(viii) une configuration essentiellement hexagonale comprenant des côtés alternants de configuration convexe et de configuration concave, avec ou sans bords arrondis.

2. Clou d'antidérapage selon la revendication 1, dans lequel l'emplacement du centre de gravité (S₁) de la portion de tête (11) est décalé en direction latérale par rapport au centre de gravité (S₃) de la portion inférieure (13) ; et dans lequel l'emplacement du centre de gravité (S_{P}) de l'élément (15) faisant office de corps en forme de broche est décalé en direction latérale par rapport au centre de gravité (S₃) de la portion inférieure (13).

3. Clou d'antidérapage selon la revendication 1 ou 2, dans lequel l'emplacement du centre de gravité (S₁) de la portion de tête (11) est décalé en direction latérale par rapport au centre de gravité (S₃) de la portion inférieure (13) ; et dans lequel l'emplacement du centre de gravité (S_{P}) de l'élément (15) faisant office de corps en forme de broche est décalé en direction latérale par rapport au centre de gravité (S₃) de la portion de tête (11).

4. Clou d'antidérapage selon la revendication 1, 2 ou 3, dans lequel l'emplacement du centre de gravité (S_{P}) de l'élément (15) faisant office de corps en forme de broche est décalé en direction latérale par rapport au centre de gravité (S₃) de la portion inférieure (13) ; et dans lequel l'emplacement du centre de gravité (S_{P}) de l'élément (15) faisant office de corps en forme de broche est décalé en direction latérale par rapport au centre de gravité (S₃) de la portion de tête (11).

5. Clou d'antidérapage selon au moins une des revendications précédentes, dans lequel la portion inférieure (13) possède, lorsqu'on porte son regard dans une vue de sommet sur la portion de tête (11) et sur la surface supérieure :
(i) une configuration essentiellement triangulaire avec ou sans bords arrondis ; ou
(ii) une configuration triangulaire essentiellement symétrique avec ou sans bords arrondis ; ou
(iii) la configuration d'un triangle équilatéral avec ou sans bords arrondis ; ou
(iv) une configuration essentiellement hexagonale avec ou sans bords arrondis ; ou
(v) une configuration essentiellement hexagonale comprenant des côtés alternants de forme rectiligne et sous la forme de segments, avec ou sans bords arrondis ; ou
(vi) une configuration essentiellement hexagonale comprenant uniquement des côtés de forme rectiligne, avec ou sans bords arrondis ; ou
(vii) une configuration essentiellement hexagonale comprenant uniquement des côtés de configuration convexe, avec ou sans bords arrondis ; ou
(viii) une configuration essentiellement hexagonale comprenant uniquement des côtés de configuration concave, avec ou sans bords arrondis ; ou
(ix) une configuration essentiellement hexagonale comprenant des côtés alternants de configuration convexe et de configuration concave, avec ou sans bords arrondis.

6. Clou d'antidérapage selon au moins une des revendications précédentes, dans lequel la portion médiane (12) possède, lorsqu'on porte son regard dans une vue de sommet sur la portion de tête (11) et sur la surface supérieure :
(i) une configuration essentiellement triangulaire avec ou sans bords arrondis ; ou
(ii) une configuration triangulaire essentiellement symétrique avec ou sans bords arrondis ; ou
(iii) la configuration d'un triangle équilatéral avec ou sans bords arrondis ; ou
(iv) une configuration essentiellement hexagonale avec ou sans bords arrondis ; ou
(v) une configuration essentiellement hexagonale comprenant des côtés alternants de forme rectiligne et sous la forme de segments, avec ou sans bords arrondis ; ou
(vi) une configuration essentiellement hexagonale comprenant uniquement des côtés de forme rectiligne, avec ou sans bords arrondis ; ou
(vii) une configuration essentiellement hexagonale comprenant uniquement des côtés de configuration convexe, avec ou sans bords arrondis ; ou
(viii) une configuration essentiellement hexagonale comprenant uniquement des côtés de configuration concave, avec ou sans bords arrondis ; ou
(ix) une configuration essentiellement hexagonale comprenant des côtés alternants de configuration convexe et de configuration concave, avec ou sans bords arrondis.

7. Clou d'antidérapage selon au moins une des revendications précédentes, dans lequel la portion médiane (12) reproduit, lorsqu'on porte son regard dans une vue de sommet sur la portion médiane (12) en direction radiale vers l'intérieur le long de l'axe du clou, la configuration de la portion inférieure (13) à une dimension réduite.

8. Clou d'antidérapage selon la revendication 1, dans lequel les côtés de configuration convexe dans l'option (vi), (vii) ou (viii) de la partie caractérisante de la revendication 1, sont plus longs que les côtés de configuration concave.

9. Clou d'antidérapage selon la revendication 1, dans lequel, lorsqu'on porte son regard dans une vue de sommet sur la portion de tête (11) et sur la surface supérieure, la portion de tête (11) possède :
(i) une configuration essentiellement hexagonale comprenant des côtés alternants de configuration convexe et de configuration concave ; dans lequel deux des trois côtés de configuration convexe possèdent la même longueur ou environ la même longueur et le troisième côté de configuration convexe possède une longueur supérieure à celle des deux autres côtés de configuration convexe ; ou
(ii) une configuration essentiellement hexagonale comprenant des côtés alternants de configuration convexe et de configuration concave ; dans lequel les trois côtés de configuration concave possèdent la même longueur ou environ la même longueur ; ou
(iii) une configuration essentiellement hexagonale comprenant des côtés alternants de configuration convexe et de configuration concave ; dans lequel les trois côtés de configuration convexe possèdent la même longueur ou environ la même longueur ; ou
(iv) une configuration essentiellement hexagonale comprenant des côtés alternants de configuration convexe et de configuration concave ; dans lequel deux des trois côtés de configuration concave possèdent la même longueur ou environ la même longueur et le troisième côté de configuration concave possède une longueur supérieure à celle des deux autres côtés de configuration concave ; ou
(v) une configuration essentiellement hexagonale comprenant des côtés alternants de configuration convexe et de configuration concave ; et dans lequel deux des trois côtés de configuration convexe possèdent la même longueur ou environ la même longueur et le troisième côté de configuration convexe possède une longueur supérieure à celle des deux autres côtés de configuration convexe.

10. Clou d'antidérapage selon la revendication 9, dans lequel, dans l'option (iv) de la revendication 9, le troisième côté de configuration concave est situé à l'opposé du côté le plus long de configuration convexe ; ou dans lequel, dans l'option (v), le troisième côté de configuration convexe est situé à l'opposé du côté le plus long de configuration concave.

11. Clou d'antidérapage selon la revendication 1, dans lequel, dans l'option (iii) de la section (B) de la revendication 1, la lentille comprend un côté au moins essentiellement convexe et un côté au moins essentiellement concave.

12. Clou d'antidérapage selon au moins une des revendications précédentes, dans lequel, lorsqu'on porte son regard dans une vue de sommet sur l'élément (15) faisant office de corps en forme de broche et sur la surface supérieure, l'élément (15) faisant office de corps en forme de broche reproduit la configuration de la portion de tête (11) à une dimension réduite.

13. Bandage pneumatique comprenant une bande de roulement, la bande de roulement comprenant plusieurs clous d'antidérapage (10) ; dans lequel au moins un des clous (10), de préférence la majeure partie des clous (10) ou la totalité des clous (10) représente(nt) des clous (10) selon la revendication 1.
